# EUROPEAN PATENT APPLICATION

(11) **EP 2 627 131 A1**
(43) Date of publication of application: **14.08.2013**
(21) Application number: 12305147.6
(22) Date of filing: 10.02.2012
(51) Int. Cl.: H04W 52/02

(54) **Method for remotely activating a device that has been put in a standby mode**

(71) Applicant: Thomson Licensing, 92130 Issy-les-Moulineaux (FR)
(72) Inventor: Jeanne, Ludovic, 35576 Cesson Sevigne (FR); Maetz, Pascal, 35576 Cesson Sevigne (FR)
(74) Representative: Perrot, Sébastien

(57) **Abstract**

The present invention concerns a power manager of a device comprising an interface module and method at said power manager comprising the steps of:
(a) Activating the interface module during a first period, so that the interface module can connect to an interface module of a second device,
(b) If a message is received from said second device during said first period, keeping said interface module active,
(c) If no message is received from said second device during said first period, switching off said interface module, and going back to step (a) after a second period.

## Description

### FIELD OF THE INVENTION

The present invention relates generally to power consumption in electronic devices and in particular to a method for remotely activating a device that has been put in a standby mode by limiting the device consumption in standby mode.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A residential network comprises more and more electronic devices interconnected to each other. Some of them, like a residential gateway, are always active. A residential gateway permits to connect the residential network to the Internet, and it permits to provide Internet services to the residential network. Some services, such as the voice over IP service, require the gateway to be always active. Other devices of the residential network may be put in a low power mode, or standby mode, where power consumption is low. In that mode, these devices offer a limited set of functionalities. It often appears that a device in a low power mode may only be switched on activation of a button located on the device. A device may also be remotely activated. This requires an interface of the device to be always active to receive a remote message or signal. The Wake-on-LAN is a network technology that permits to remotely wake up a device having an Ethernet interface. When the device is shut down, the Ethernet interface is maintained sufficiently active to receive Wake-on-LAN message requests so that the device is activated. Another example is the Wake-on-WirelessLAN, which permits to wake up a device using its wireless interface. However, it requires the wireless interface to be active to detect a remote wireless signal indication. However, an active wireless interface consumes power.

### SUMMARY OF THE INVENTION

The present invention attempts to remedy at least some of the concerns connected with power consumption in the prior art, by providing a method for remotely activating a device while minimizing power consumption of that device when in a low power mode.

The invention concerns a method in a power manager of a device comprising an interface module, the method comprising, at the power manager, the steps of (a) activating the interface module during a first period, so that the interface module can connect to an interface module of a second device, (c) if a message is received from the second device during the first period, keeping the interface module active, and (c) if no message is received from the second device during the first period, switching off the interface module, and going to step (a) after a second period.

According to the invention, the device comprising an interface module does not need to keep its interface module continuously active to be able to receive an indication from another device. When the interface module is switched off it does not consume power. It is no longer connected to the remote interfaced module. The interface module of the device is periodically switched on to check if it receives an instruction from a remote device.

According to an embodiment, the method comprises enabling energy supply to the interface module for activating the interface module and disabling energy supply to the interface module for switching off the interface module.

According to an embodiment, the method is performed when the device is in a standby mode.

According to an embodiment, the step (b) comprises the step of switching on the device.

According to an embodiment, the step of switching on the device comprises the step of enabling energy supply to a central processor of the device.

According to an embodiment, the message is adapted to request activation of the interface module.

According to an embodiment, the message is adapted to request activation of the device.

According to an embodiment, the interface module is a wireless interface module.

According to an embodiment, the step of connecting to a wireless module comprises an association to the wireless module.

Another object of the invention is a power manager in a device comprising an interface module for communicating to an interface module of a second device, the power manager being adapted for regularly switching on the interface module so that the interface module can connect to an interface module of a second device, keeping the interface module active on reception of an interruption message, and switching off the interface module if no interruption message is received during a period.

According to an embodiment, the power manager is adapted to enable power supply to a processor of the device on reception of the interruption message.

According to an embodiment, the power manager is adapted to disable power supply to the interface module on reception of a low power signal from the processor.

Another object of the invention is a method in a service manager of a device comprising a first interface module, the method comprising, at the service manager, the steps of identifying that a wireless interface of a second device is disconnected from the first interface module, receiving a service request destined to the second device, and on detection that the wireless interface of the second device is connected to the first interface module, sending a service request to the second device.

Another object of the invention is a service manager of a device comprising a first interface module for identifying if a wireless interface of a second device is disconnected from the first interface module, on reception of a request destined to the second device, sending the request to the first device once the device is connected to the first interface module.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a block diagram of a system compliant with the embodiment;
- Figure 2 is a block diagram of a gateway and a set-top box of the embodiment;
- Figure 3 is a flow chart representing the behavior of the service manager of the gateway; and
- Figure 4 is a flow chart representing the behavior of the power manager of the set-top box.

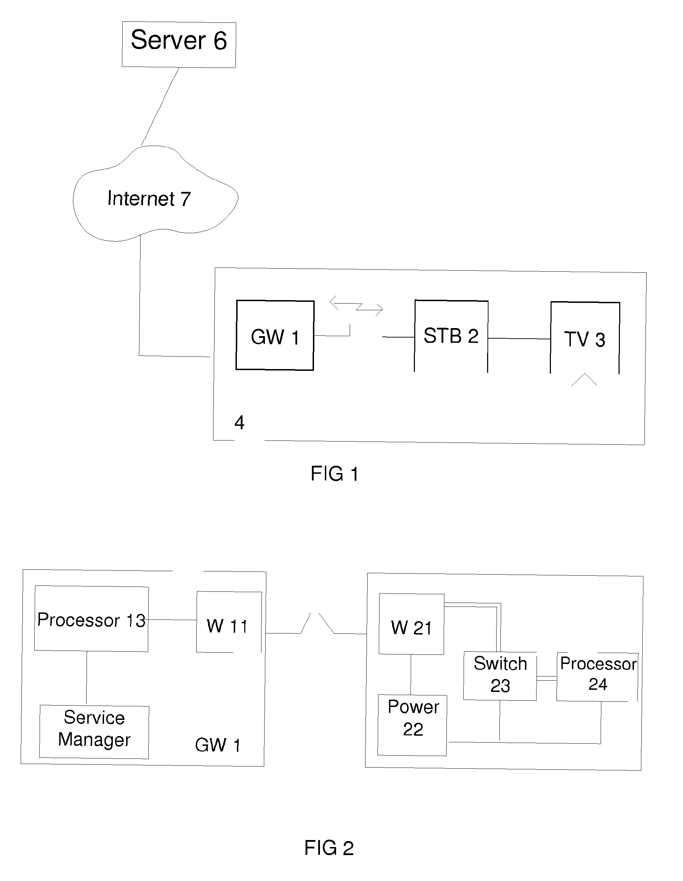

In Figure 2, the represented blocks are purely functional entities, which do not necessarily correspond to physically separate entities. Namely, they could be developed in the form of hardware or software, or be implemented in one or several integrated circuits.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

The exemplary embodiment comes within the framework of a residential gateway wirelessly connected to a set-top box, but the invention is not limited to this particular environment and may be applied within any other frameworks where two devices may be wirelessly connected.

Figure 1 illustrates a system according to an embodiment of the invention. A gateway 1 and a set-top box 2 are located in a residential network 4. The gateway communicates to the set-top box through a wireless link 5, compliant to the IEEE802.11 set of standards as defined in the IEEE802.11 - version of 12 June 2007. In particular the wireless interface of the embodiment is compliant to the IEE802.11a standard. This is a standard that specifies wireless transmissions on the 5GHz band. The set-top box is connected to a television set 3, and provides decoded audio video content to the television set so that it can be displayed on the television set. The gateway is adapted to communicate to a server 6 located on the Internet 7. The server may send encoded data, for example a video-on-demand, to the set-top box through the gateway. The set-top box is adapted to communicate to the server through the gateway. Of course, the wireless link might be any other wireless LAN technology. It could be even any other wireless technology that permits to exchange data between two devices in a bidirectional transfer. The residential network of the embodiment comprises one set-top box; of course it might comprise more than one set-top box.

Figure 2 represents in more details the gateway 1 and the set-top box 2 of the embodiment. Of course it represents only the modules relevant to the invention and does not indicate the modules well known to the skilled in the art. The gateway comprises a wireless module 11 and a service manager 12. The wireless module is an access point compliant to IEE802.11a. The service manager is adapted to detect if a service is requested for the set-top box. It is adapted to detect if the set top box is connected or not to the gateway. The service manager also comprises a memory to store at least an identification of the set-top box. It may either be the MAC address, the IP address or any other identifier. In particular, the service manager stores the set-top box identifier for each set-top box identified in the residential network. The service manager also maintains the status of the set-top boxes, i.e. connected or not connected. Alternatively the statuses are active, inactive of in standby modes; the standby mode corresponding to the low power mode of the embodiment. The service manager is adapted to either receive a request or intercepts a request addressed to the set-top box. In particular it tracks service requests when the set-top box is not connected to the gateway and cannot be informed that a service has been requested. The service manager is also adapted to keep in memory the service request destined to the set-top box. Then, on detection that the set-top box is connected to the gateway, it informs the set-top box as more detailed hereinafter.

The set-top box comprises a wireless module 21, a power manager 22, a processor 24 and a switch 23. The wireless module is a station compliant to IEE802.11a. The processor is the main processor of the set-top box. It operates the majority of applications and functions running on the set top box. When the main processor is switched off, most of the set top box modules are inactive. Of course, the set-top box comprises other modules not represented. The power manager is adapted to activate or deactivate energy supply to the modules of the set top box, and in particular the processor and the wireless module. When energy supply is deactivated, the wireless module is switched off. The switch module is connected to the wireless module, the processor and the power manager. The switch module routes data between the wireless module and the processor. In particular, on reception from the wireless module of a Magic packet defined hereinafter, the switch module is adapted to send a signal to the power manager, the signal being called a Magic signal hereinafter. Of course, in some set top box implementations, the switch module might be comprised in the wireless module.

In a standby mode, also called low power mode, the main processor is switched off, and most of the modules are inactive. The wireless connection of the set-top box is also inactive and the set-top box is not connected to the gateway. More precisely, when entering the standby mode of the embodiment, the power manager enters the Wireless Survey mode. The Wireless Survey mode consists in regularly activating the wireless module so that it connects to the gateway to check if a Magic packet is received from the gateway. Preferably in a standby mode, the power manager is the only active module of the set top box.

In the embodiment, the service manager of the gateway identifies that the set top box is connected or not. In a variant, the set top box is adapted to send a standby message to the gateway before entering the standby mode. The standby message is a specific message addressed to the service manager; it comprises the identifier of the set top box and an indication that it will enter the standby mode. The service manager is then aware if the set top box is active, in a standby mode or inactive.

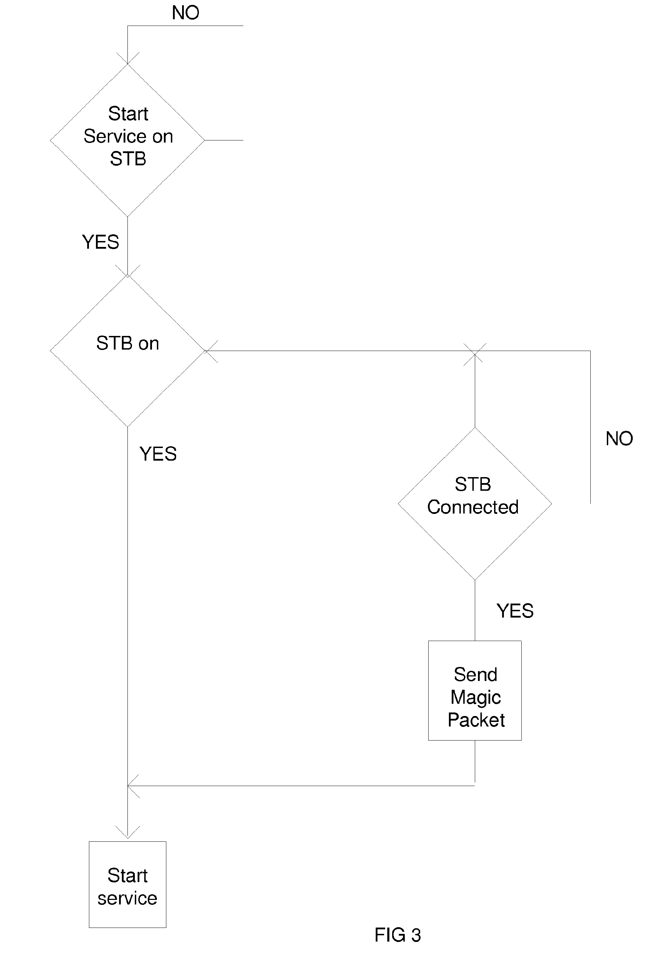

Figure 3 represents the behavior of the service manager 12. The service manager is adapted to check if a service has been launched or requested for the set-top box that is in a low power mode. For example the service is a video download from the remote server. The request for the service may have been received from a remote control device in the residential network, or intercepted from a remote device through the Internet.

When the service manager detects that a set-top box is in a standby mode, or not connected, it intercepts any request coming from the Internet and addressed to the set-top box. On detection that the wireless interface of the set-top box has been connected again to the gateway, the service manager sends a specific packet to the set-top box, the Magic packet. The Magic packet is intended to inform the set-top box to wake up. Then, when the set-top box is woken up, it can start the service. In particular, the video download is started from the remote server to the set-top box. The wireless module maintains a table comprising the list of devices that are connected. To detect that the wireless interface of the set top box has been connected, the service manager periodically reads the table.

Preferably, the service manager does not wait indefinitely that the set-top box is connected to the gateway. On reception of the request, the service manager starts a timer called the service timer. When the service timer expires, at service timeout, the service manager stops checking the set-top box connection. The service timeout value is configurable and depends on the first timeout value of the set top box as indicated hereinafter.

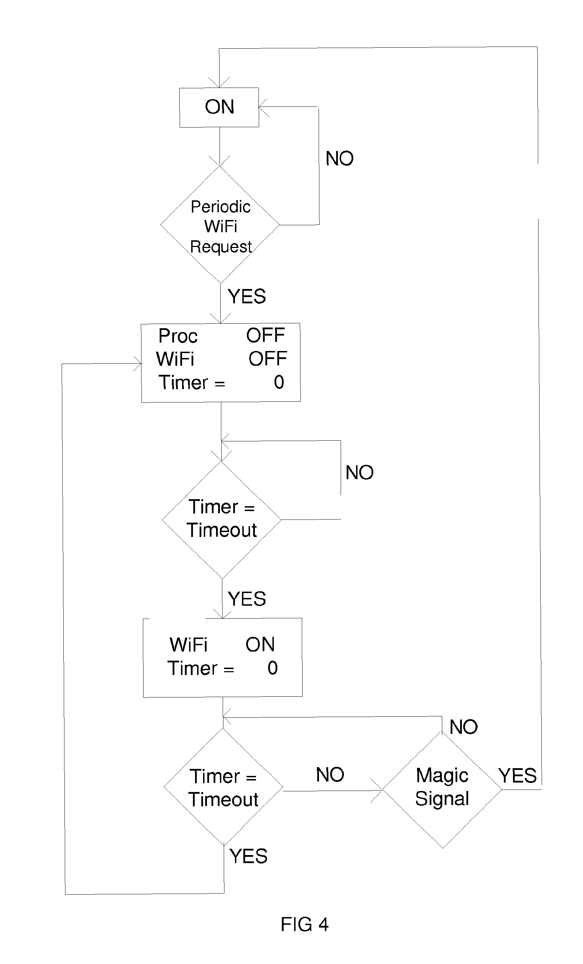

Figure 4 represents the behavior of the power manager of the set-top box. The power manager is in the ON state, where all modules in the set-top box are active. In that mode the power manager activates energy supply to the processor and the wireless module. The power manager periodically checks whether it is set into a low power mode. Alternatively all modules are not active in the ON state, but at least the wireless module is active. When it is set in a low power mode, the power manager deactivates energy supply to the processor. It also deactivates energy supply to the wireless module. The wireless module is switched off. It does not consumer power. It is no longer associated to the access point of the gateway.

The power manager is set in the Wireless Survey mode on reception of a low power signal from the main processor. The main processor sends a low power signal to the power manager before switching off, to indicate to the power manager to enter the Wireless Survey mode. The power manager then starts a first timer so that at every first timeout, it launches a wireless survey that consists in the following. It activates energy supply to the wireless module and launches a second timer. The wireless module then switches on and connects to the wireless module of the gateway. The station wireless module associates to the access point wireless module of the gateway, the association being compliant with the IEEE802.11 association process. When associated, the access point and the station can exchange data. If the power manager receives a Magic signal, this means that the set-top box is requested to wake up. The power manager then activates energy supply to the processor, and the device is switched on. It of course maintains energy supply to the wireless module. When the second timer expires, i.e. a second timeout occurs, and the power manager has not received any Magic signal, the power manager disables energy supply to the wireless module, and starts the first timer again.

The first and second timeout values are configurable locally or remotely in a manner well known per se. The first timeout depends on the occurrence of a service. It also depends on how long the service can be delayed. Depending on the time of the day, it can also be longer or shorter. In general it is a few minutes to several hours. For example, the first timeout is shorter during the day and longer during the night where the probability of switching on a set-top box is lower. In addition, a service such as a video-on-demand is generally activated in advance. It does not require the set-top box to be automatically activated on reception of a request. A delay between the request and the start of the service is acceptable.

The second timeout value takes into account the time required to associate to the gateway and to receive a packet from the gateway. It corresponds to a few seconds.

The service timeout value of the gateway is about the same as the first timeout value. It is set so that the gateway can receive a request for a service, and wait long enough that the wireless module of the set top box is active.

An example of an implementation of the embodiment is now described. The service is a video-on-demand that can be remotely launched by an end user. It corresponds to loading an audiovisual program on the set-top box hard drive so that it can be viewed later by an end user. The end user is not present in his house and the set top box has been automatically put in a standby mode, where the wireless module is inactive. The end user is aware that the set-top box can be automatically put in a standby mode. The end user knows that a request should be sent in advance to take into account the delay between the reception of the request at the gateway and the activation of the set-top box. In particular, the end user may start the service in the afternoon so that content can be downloaded by the evening.

To start the service, the end user connects to the service provider and launches the video-on-demand service. Later, the server sends a request to the set top box. The set top box is on a standby mode and it has been identified by the gateway. On interception of the request, the gateway starts monitoring when the wireless interface of the set top box is connected to the gateway. When it detects that it is connected, it sends a Magic packet to the set top box. Then, on reception of the Magic packet, the set top box switches to an active mode. The gateway further sends more information on the service request and the set top box can trigger the video download from the server.

In the embodiment, the power manager enables or disables energy supply to the processor. Of course, in an alternative embodiment, the power manager might send a signal to wake up the processor, the processor having a low power mode where it can listen to signals from the power manager.

The service indicated hereinabove is a video on demand. Of course other types of services can be used, such as remote configuration services, where an operator may remotely access the set top box for some firmware upgrade. More generally the gateway may receive any request to activate the wireless interface of the set-top box, and later indicate to the set-top box to keep the wireless interface active.

The embodiment is based on a set-top box connected to a gateway. Of course the invention applies to any other residential devices wirelessly connected to a gateway. Such devices can be mobile devices with a wireless LAN interface. The invention also applies to any device that can be controlled and operated from the gateway, such as the ones participating to home automation. In this case the service is the activation or deactivation of the device. Such devices could be electric shutters or boilers.

The embodiment describes a standby mode where the wireless module and the processor are deactivated. In an alternative, only the wireless module is activated and deactivated. On reception of the Magic packet, the wireless module is maintained active to be able to receive wireless traffic.

The embodiment is based on a wireless connection, and the fact that switching off a wireless module helps to save energy. Of course the invention also applies to a wired interface that consumes energy when switched on.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

## Claims

1. A method in a power manager of a device comprising an interface module, said method comprising, at said power manager, the steps of:
(a) Activating the interface module during a first period, so that the interface module can connect to an interface module of a second device,
(b) If a message is received from said second device during said first period, keeping said interface module active,
(c) If no message is received from said second device during said first period, switching off said interface module, and going to step (a) after a second period.

2. Method according to claim 1, comprising enabling energy supply to said interface module for activating said interface module and disabling energy supply to said interface module for switching off said interface module.

3. Method according to claims 1 or 2, said method being performed when said device is in a standby mode.

4. Method according to claim 3, said step (b) comprising the step of switching on said device.

5. Method according to claim 4, the step of switching on said device comprises the step of enabling energy supply to a central processor of said device.

6. Method according to any one of the claims 1 to 5, said message being adapted to request activation of the interface module.

7. Method according to any one of the claims 1 to 5, said message being adapted to request activation of the device.

8. Method according to any one of the preceding claims, said interface module being a wireless interface module.

9. Method according to claim 8, the step of connecting to a wireless module comprising an association to the wireless module.

10. A power manager in a device comprising an interface module for communicating to an interface module of a second device, said power manager being adapted for regularly switching on the interface module so that the interface module can connect to an interface module of a second device, keeping said interface module active on reception of an interruption message, and switching off said interface module if no interruption message is received during a period.

11. Power manager according to the preceding claim, being adapted to enable power supply to a processor of said device on reception of said interruption message.

12. Power manager according to claim 11 or 12, being adapted to disable power supply to said interface module on reception of a low power signal from said processor.

13. Method in a service manager of a device comprising a first interface module, said method comprising, at said service manager, the steps of:
Identifying that a wireless interface of a second device is disconnected from said first interface module;
Receiving a service request destined to said second device, and
On detection that the wireless interface of said second device is connected to said first interface module, sending a service request to said second device.

14. A service manager of a device comprising a first interface module for identifying if a wireless interface of a second device is disconnected from said first interface module, on reception of a request destined to said second device, sending said request to said first device once said device is connected to said first interface module.
